Europäisches Patentamt

European Patent Office

Office européen des brevets

(11) Publication number: **0 325 896**
**A1**

## (12) EUROPEAN PATENT APPLICATION

(21) Application number: **88830385.6**

(22) Date of filing: **20.09.88**

(51) Int. Cl.⁴: **B60R 7/08**

The title of the invention has been amended (Guidelines for Examination in the EPO, A-III, 7.3).

(30) Priority: **23.09.87 IT 1830587**

(43) Date of publication of application:
**02.08.89 Bulletin 89/31**

(84) Designated Contracting States:
**BE CH DE ES FR GB LI**

(71) Applicant: **Borriello, Vincenzo**
**Via L.B.O. Mancini, 23**
**I-83100 Avellino(IT)**

(72) Inventor: **Borriello, Vincenzo**
**Via L.B.O. Mancini, 23**
**I-83100 Avellino(IT)**

(54) **Umbrella holder for car door panels and side panels of motor vehicles.**

(57) An umbrella holder for motor vehicles comprising a housing (1) fastened to a panel (P), a lid (2) for closing the housing at its upper part and a bushing (13) at its lower part to eliminate the dripping water in two alternative ways. In a first way, the water is eliminated indirectly by a collecting box (27) removably connected to the housing (1) by releasable fastening means (29, 35). In a second way, the water is eliminated directly to the outside of the vehicle by means of a discharging tube connected to the bushing (13) and crossing the panel (P).

TAV. III

FIG.3

FIG.1

FIG.4

FIG.5

FIG.2

EP 0 325 896 A1

## Appliance to fit umbrellas in motor vehicles with the alternate possibility of the elimination of the drip-drop water indirectly or immediately or directly.

The invention concerns an appliance to fit umbrellas in motor vehicles with the alternate possibility of the elimination of the drip-drop water indirectly or immediately or directly, connected to car door panels and motor vehicles walls. It is suitable also to avoid the drip-dropping on the floor and contact between the wet umbrella's covering and the driver or passengers.

In the motor vehicles, at present, an umbrella is arranged precariously because there are no suitable vehicle accessories to fit it and to avoid the drip-dropping on the floor and the contact between its wet covering and the tapestry or, as many cases, with the driver or passengers.

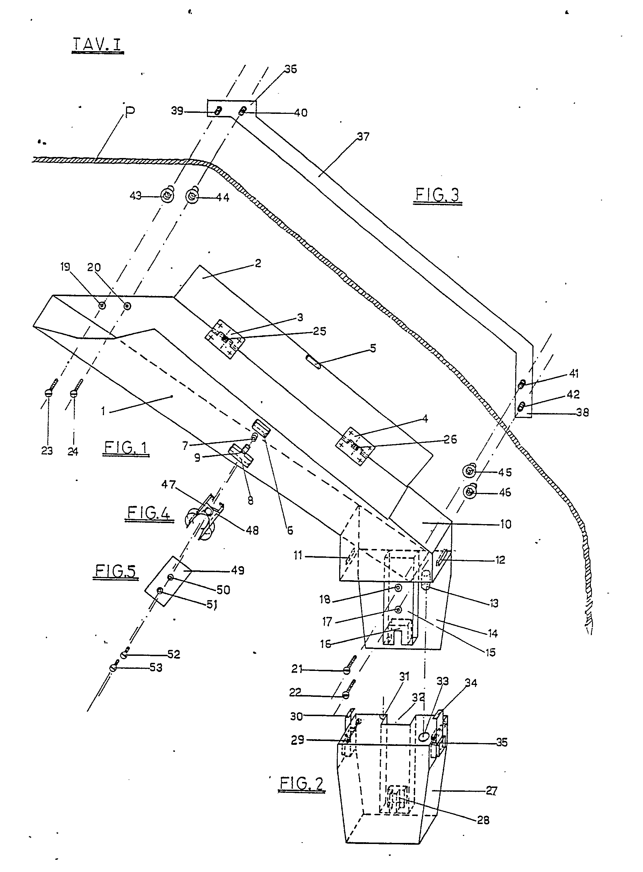

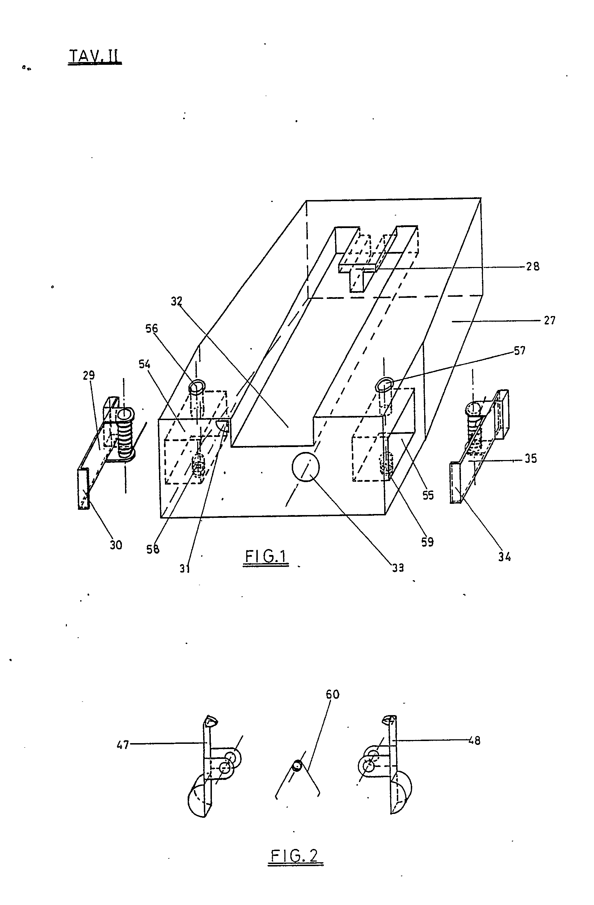

This invention's aim is to remedy the above-mentioned want. The invention as claimed solves the problem of creating an appliance that is more practical and effective in order to fit umbrellas in motor vehicles. Through the use of this type of an appliance one can get the following results: an umbrella is fit at least by the length from the tip of the ferrule to the whole covering of the umbrella (the part of the stick and handle that stand out are anyway included in the perimeter of the door). Thanks to the suitable lid it has, no wet edges of the umbrella can stick out; the elimination of the drip-drop water can take place in two different ways, that are alternate. In the first way (indirectly) the drip-drop water accumulates into a suitable box (plate 1-FIG.2) that can be removed in order to empty it. In the second way (directly) the drip-drop water, through a bushing (a) and its connected tube (b) that crosses the panel (P) (plate 3-FIG.1), goes inside the car door and it eliminates through the inside drains to eliminate the rain water. The invention is described in detail below with reference to drawings which illustrate only one specific embodiment. Plate 1 is the procedure of an appliance, on a reduced scale, with all the parts that form it (figures 1-2-3-4-5) to fit umbrellas in motor vehicles with the possibility of elimination of the drip-drop water indirectly, in accordance with the invention.

Plate 2 is:1) a view, on a less reduced scale, of the box to amass the drip-drop water (FIG.1) which is laid on its frontal side with its spring hooking elements (29-35) that are disconnected; 2) a view, on a reduced scale, of a spring tongs (FIG.2) with spaced elements (47-48) and the spring (60) is not inserted.

Plate 3 is the procedure of an appliance, on a reduced scale, with all the parts that form it (figures 1÷2+3+4+5) to fit umbrellas in motor vehicles with the possibility of elimination of the drip-drop water immediately (or directly), in accordance with the invention.

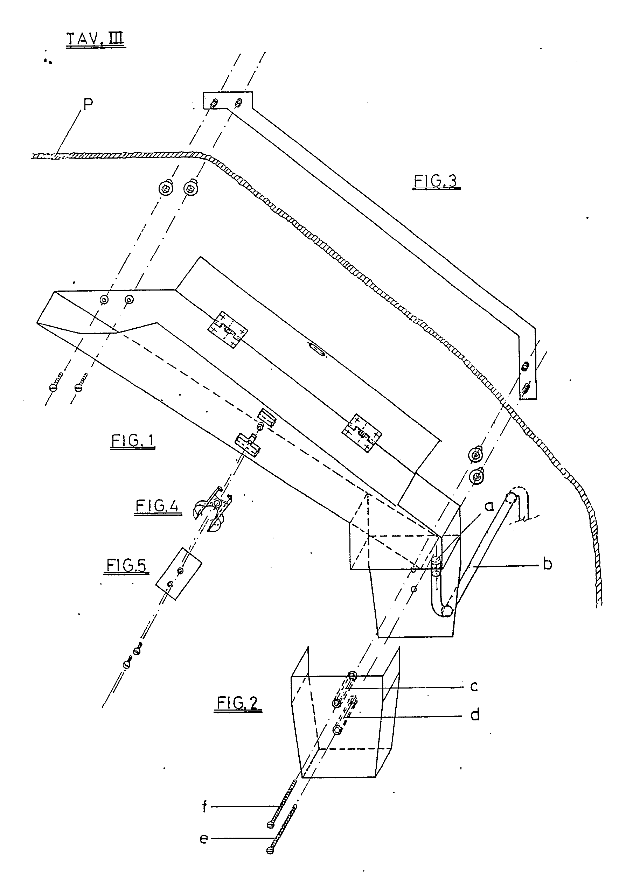

In reference to plate 1, an adequate support (FIG.3) made of two plates (36 and 38) united by a strap of connection (37) and topped by four bushings (39-40-41-42), externally bordered and supplied with circular loop holes, also bordered, is suitably connected to the back of the door panel(P) or wall of a motor vehicle. The four above-mentioned bushings penetrate in the corresponding loop holes of bigger size made in the panel and thanks to four counter-bushings (43-44-45-46) provided with an adequate circular hole that passes and is bordered, which are screwed tightly, allow a perfect attachment of the support of the panel. A Housing of the umbrella (FIG.1), seen open with its lid (2) pushed against the panel (P) by the springs (25-26) of the two hinges (3-4), is connected to the panel, supplied with afore said support, by means of the clamping screws (21-22-23-24) that, through loop holes (17-18-19-20), are screwed into the correspondent bordered bushings of the support. A suitable water-proof box (FIG.2) supplied with adequate spring hooking elements (29-35) situated in its opposite sides, made to receive the umbrella's drip-drop water is connected to the above-mentioned umbrella's housing in the following way: keeping open the two hooked elements by putting pressure with one's finger down on the protruding base of the external faces, the box is rested on the terminal level (14) of the back wall of the umbrella's housing, at an inferior height compared to the bushing's position (13) and in such a way that the back longitudinal cavity (32) can be inserted into the protruding element (15). Therefore,while keeping open the above-mentioned hooking elements, the box must slide from the bottom going upwards in such a way that the bushing (13) penetrates in the right hole (33) of the box and T element (28) (third hook) placed at the base of the longitudinal cavity (32) lodges itself in the cavity (16) situated at the base of the protruding element (15). At this point, it is necessary to remove the fingers from the protruding hooking elements bases (29-35) that, because of the action of the springs with which they are supplied, hook themselves into the corresponding cavities (11-12). In such a way the box is efficiently connected to the umbrella's housing, since it is fastened to it in three places,so that it cannot swing sideways or forward. For the emptying operation, obviously the box must be unfastened, by doing the opposite of what has been just explained. For the closing and opening of the lid (2), fixed in front face of the umbrella's

2

housing there are: a spacer element (6) between the two setting elements of the spring tongs (FIG.4); a pivot (7) supplied with a bordered circular blind hole; a T element (8) upside down, supplied with a bordered circular blind hole (9). A spring tongs (FIG.4),(better seen in plate 2 - FIG.2), is placed on the pivot (7) in such a way that the internal faces of the upper part of both its elements lean against the side faces of the spacer element (6). Then the covering plate (FIG.5) is adjusted with clamping screws (52-53) that through loop holes (50-51) are screwed tightly in the pivot's bordered blind hole (7) and in the bordered blind hole (9). In order to close the lid (2) all you have to do is put pressure with one's hand on its upper face. In such a way the bushing which is put horizontally (5), supplied with a loop hole, pushing to 45° the slanting superior faces of the hooks situated on the extremities of the elements internal faces of the tongs, will open the elements which, because of the spring's action, will close again, allowing the aforesaid hooks to fasten onto the bushing. All you have to do to open the lid is to push down on the protuberances at the base of the external face of the tongs' elements: its catching elements will unfasten themselves from the lid's bushing and this will bounce against the panel, pushed by the action of the springs (25-26) of the hinges (3-4). The lid (2), as so held against the panel because of the continuous action of the above-mentioned springs, makes a practical support surface and guide for a fast introduction of the umbrella into its lodging. In order to adjust the umbrella, all you have to do is introduce the ferrule of the stick into the short cavity situated beneath the upper short wall (10) and therefore let the umbrella drop into its lodging. In order to pull out the umbrella, obviously with the lid open, all you have to do is let it slide from the bottom upwards until the ferrule's extremity is high enough compared to the short wall (10). It can, therefore, be pulled out very quickly.

For what concerns the alternative possibility of the drip-drop water elimination directly we refer to drawings on the plate 3. Unlike what has just been described, notice that there is no box for the water accumulation. Besides, no protruding element appears on the terminal surface of the back wall of the umbrella's housing (FIG.1). The drip-drop water goes through the bushing (a) in the water-proof flexible tube (b) suitably connected. The tube, through suitable corresponding loop holes made in the above-mentioned terminal surface and panel, unwinds inside the door so it does not interfere with the window during the opening and closing phases and makes the water go down the drain. The part of the tube that is connected from the bushing (a) to the hole found on the terminal surface if protected by an adequate template (FIG.2).

This is then connected to both the above-mentioned surface and support (FIG.3) by means of tight screws (f-e).

What has just been described and represented here are just two of the possible forms of the invention and can therefore be changed in various ways - it would be useless to list them, without going out of the circle of the present invention.

**Claims**

1. Appliance to fit umbrellas in motor vehicles with the alternate possibility of the elimination of the drip-drop water indirectly or immediately or directly characterized in that it is adequately connected to door panels and motor vehicle walls.

2. Appliance as claimed in claim 1 comprising: 1) an umbrella's holder (plate 1- FIG.1),connected to door panels and motor vehicle walls by a suitable support (FIG.3), characterized: a) by adequate elements (6-7-8-9) that are placed on its front face for the connection of a fastening element (FIG.4) and an adequate covering plate (FIG.5); b) by holes (17-18-19-20) that are placed on its back wall for the crossing of the fastening means (21-22-23-24); c) by a short upper wall (10) towards the side that is closed at the end; d) by a prominent solid part, placed under the its terminal lower wall, supplied, on its side faces, with two adequate cavities (11-12) in order to allow the fastening of a water-collection box (FIG.2); e) by a suitable bushing (13) placed adequately to allow the crossing of the drip-drop water; f) by a vertical surface (14) at the terminal part of its black wall, towards the side that is closed at the end, topped by a solid element (15) supplied with an adequate cavity (16), in order to provide a support, sliding and fastening of the above-mentioned box (FIG.2); g) by an appropriate lid (2) supplied with a fastening element (5)and connected to its back wall by two hinges (3-4) supplied with adequate springs (25-26) in order to push it against the panel and to keep it so by their continuous action;

2) A water-proof box (FIG.2) in order to collect the drip-drop water, supplied with the following elements that cha racterize it: a hole (33) on its upper wall; a back cavity (32); two spring fastening elements (29-35) placed on its opposite side walls; a solid T element (28) to embed, placed at the base of said cavity 32. All these elements are suitable in order to connect it to umbrella's housing(FIG.1).

3. Appliance as claimed in claims 1 and 2 characterized by the following variations (plate 3); 1) elimination of the protruding element (15 FIG.1-plate 1) and relative cavity (16); 2) elimination of the two cavities (11-12)FIG.1-plate 1); 3) elimination of the box to collect the drip-drop water (FIG.2-plate 1); 4) addition of a water-proof flexible tube (b), or rigid and suitably shaped, adequately connected to the bushing (13 FIG.1-plate 1 or rather (a) FIG.1-plate 3), which, crossing a hole placed in the vertical terminal surface of the back wall of the umbrella's housing (FIG.1) and a corresponding hole in the panel (P), allows the flowing of the drip-drop water inside the door so it is eliminated by going down the prearranged drains, or rather existent; 5) addition of an adequate protective template (FIG.2)connective in contemporary to the umbrella's housing (FIG.1) and to the support (FIG.3) by means of fixing screws (f-e).

4. Appliance to fit umbrellas in motor vehicles is substantially correspondent to what is described and reported.

EP 0 325 896 A1

TAV.I

FIG.3

FIG.1

FIG.4

FIG.5

FIG.2

TAV. II

FIG.1

FIG.2

TAV. III

P

FIG.3

FIG.1

FIG.4

FIG.5

a

b

FIG.2

c

d

f

e

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 136 136  (PERRUN) <br> * The whole document * | 1 | B 60 R    7/08 |
| A | | 3 | |
| | --- | | |
| A | REVUE AUTOMOBILE, vol. 75, no. 51, December 1981, page 11, Berne, CH; "Genève: 1000 idées à vendre..." <br> * Central figure * | 1 | |
| | --- | | |
| A | DE-U-8 600 880  (PUTTKAMER) <br> * The whole document * | 1 | |
| | ----- | | |

TECHNICAL FIELDS
SEARCHED (Int. Cl.4)

B 60 R
A 45 B
A 47 G

The present search report has been drawn up for all claims

| Place of search | Date of completion of the search | Examiner |
|---|---|---|
| THE HAGUE | 15-12-1988 | DUBOIS B.F.J. |